# EUROPEAN PATENT APPLICATION

(11) **EP 4 804 281 A1**
(43) Date of publication of application: **09.09.2026**
(21) Application number: 24885920.9
(22) Date of filing: 29.03.2024
(51) Int. Cl.: H01M 10/0585, H01M 10/42, H01M 10/0562, H01M 10/052, H01M 50/586

(54) **ALL-SOLID RECHARGEABLE BATTERY**

(30) Priority: 02.11.2023 KR 20230150319; 21.11.2023 KR 20230162448
(71) Applicant: SAMSUNG SDI CO., LTD., Yongin-si, Gyeonggi-do 17084 (KR)
(72) Inventor: KANG, Yujin, Yongin-si, Gyeonggi-do 17084 (KR); HA, Jaehwan, Yongin-si, Gyeonggi-do 17084 (KR); KOO, Dongho, Yongin-si, Gyeonggi-do 17084 (KR); KIM, Juyun, Yongin-si, Gyeonggi-do 17084 (KR)
(74) Representative: Michalski Hüttermann & Partner mbB
(86) International application number: PCT/KR2024/004043
(87) International publication number: WO 2025/095238

(57) **Abstract**

The all-solid rechargeable battery includes a plurality of unit cells each of which is formed by stacking a negative electrode, a solid electrolyte layer, and a positive electrode, and ceramic insulating layers provided at least between the negative electrodes of adjacent ones among the unit cells and on the negative electrodes positioned on outermost sides of the entirety of the unit cells.

## Description

### [Technical Field]

The present disclosure relates to an all-solid rechargeable battery.

### [Background Art]

Recently, in response to industrial demands, the development of batteries with high energy density and safety has been actively conducted. For example, lithium-ion batteries are being put into practical use not only in the fields of information-related devices and communication devices, but also in the field of automobiles. In the field of automobiles, safety is especially important because life is involved.

Lithium-ion batteries currently on the market use electrolyte solutions containing flammable organic solvents, so there is a possibility of overheating and fire in the event of a short circuit. Accordingly, an all-solid rechargeable battery using a solid electrolyte instead of an electrolyte solution has been proposed.

By not using flammable organic solvents, all-solid secondary batteries can greatly reduce the possibility of fire or explosion even in the event of a short circuit. Therefore, the all-solid batteries can greatly increase safety compared to lithium-ion batteries using electrolyte solutions.

The above-described information disclosed in the technology that serves as the background of the present disclosure is only for improving understanding of the background of the present disclosure, and thus may include information that does not constitute the related art.

### [Disclosure]

### [Technical Problem]

An embodiment attempts to provide an all-solid rechargeable battery that prevents damage due to external impacts. An embodiment attempts to provide an all-solid rechargeable battery in which a ceramic insulating layer prevents a direct short circuit between a positive electrode and a negative electrode when a cell is damaged due to an external impact, thereby reducing an amount of heat generation due to the short circuit.

An embodiment attempts to provide an all-solid rechargeable battery that assists heat dissipation to effectively lower the temperature when heat is generated.

### [Technical Solution]

An all-solid rechargeable battery according to an embodiment includes a plurality of unit cells each of which is formed by stacking a negative electrode, a solid electrolyte layer, and a positive electrode, and ceramic insulating layers provided at least between the negative electrodes of adjacent ones among the unit cells and on the negative electrodes positioned on outermost sides of the entirety of the unit cells.

Each of the unit cells may include a positive electrode current collector positioned in the middle, and a positive electrode active material layer, the solid electrolyte layer, a negative electrode active material layer forming the negative electrode, and a negative electrode current collector sequentially stacked on each of both surfaces of the positive electrode current collector forming the positive electrode.

The ceramic insulating layers may be provided on outer surfaces of the negative electrode current collectors.

A first cell of the adjacent unit cells may include the positive electrode active material layer, the solid electrolyte layer, the negative electrode active material layer, and the negative electrode current collector sequentially stacked on each of both surfaces of the positive electrode current collector, and a second cell adjacent to the first cell may include the positive electrode active material layer, the solid electrolyte layer, the negative electrode active material layer, and the negative electrode current collector sequentially stacked on each of both surfaces of the positive electrode current collector, and ceramic insulating layers positioned between the first cell and the second cell among the ceramic insulating layers may be arranged as a single layer between a pair of the negative electrode current collectors.

The ceramic insulating layers may each include at least one of alumina and boehmite and a binder.

The ceramic insulating layers may each include 5 to 10 wt% of a binder and 90 to 95 wt% of ceramic particles.

A thickness of each of the ceramic insulating layers may be 10 µm to 20 µm.

Each of the unit cells may include a positive electrode active material layer, the solid electrolyte layer, a negative electrode active material layer forming the negative electrode, and a negative electrode current collector sequentially stacked on one surface of a positive electrode current collector forming the positive electrode.

A first cell of the adjacent unit cells may include the positive electrode active material layer, the solid electrolyte layer, the negative electrode active material layer, and the negative electrode current collector sequentially stacked on one surface of the positive electrode current collector, and a second cell adjacent to the first cell may include the positive electrode active material layer, the solid electrolyte layer, the negative electrode active material layer, and the negative electrode current collector sequentially stacked on one surface of the positive electrode current collector, and ceramic insulating layer positioned between the positive electrode current collector of the first cell and the negative electrode current collector of the second cell among the ceramic insulating layers may be arranged as a single layer.

An all-solid rechargeable battery according to an embodiment includes a laminate formed by stacking a negative electrode, a solid electrolyte layer, and a positive electrode, and a ceramic insulating layer including a conductive material provided on a side opposite to the solid electrolyte layer of the negative electrode positioned on an outermost side of the laminate.

The laminate may include a positive electrode current collector positioned in the middle, and a positive electrode active material layer, the solid electrolyte layer, a negative electrode active material layer forming the negative electrode, and a negative electrode current collector sequentially stacked on each of both surfaces of the positive electrode current collector forming the positive electrode.

The ceramic insulating layer may include 30 to 95 wt% of ceramic, 0.1 to 30 wt% of a conductive material, and 1 to 40 wt% of a binder.

The ceramic insulating layer may include 80 to 90 wt% of ceramic, 5 to 10 wt% of a conductive material, and 5 to 10 wt% of a binder.

A temperature measurement portion of the laminate during a penetration test of a penetration pin may include a central portion where the penetration pin is inserted and a peripheral portion at least 30 mm away from the penetration pin, and heat dissipation characteristics may be compared based on a temperature difference ratio between the central portion and the peripheral portion.

The temperature difference ratio between the central portion and the peripheral portion may be 9 to 39%.

The temperature difference ratio between the central portion and the peripheral portion may be 9 to 12%.

A maximum temperature ratio at the central portion may be 15 to 35%.

A maximum temperature ratio of the central portion may be 15 to 16%.

### [Advantageous Effects]

In an embodiment, the ceramic insulating layers containing a ceramic material are provided between the plurality of unit cells and on the outermost sides, so it is possible to prevent damage due to an external impact and to prevent an electrical short circuit between the negative electrode and the positive electrode by the ceramic material in the event of damage.

In an embodiment, the ceramic insulating layer can prevent a direct short circuit between the positive electrode and the negative electrode when a cell is damaged due to an external impact, thereby reducing an amount of heat generation due to the short circuit.

In an embodiment, the ceramic insulating layer can prevent damage to the negative electrode current collector and damages to all the negative electrode current collectors provided in each unit cell in the event of damage due to an external impact.

In an embodiment, the ceramic insulating layer can protect the negative electrode current collector from gases generated inside the plurality of unit cells, and can minimize pores and gas penetration due to rolling.

In an embodiment, the ceramic insulating layers including a conductive material and a ceramic material are provided on the outermost sides of the laminate, so it is possible to prevent damage due to an external impact, prevent an electrical short circuit between the negative electrode and the positive electrode by the ceramic material in the event of damage, and assist heat dissipation by the conductive material to effectively lower the temperature when heat is generated.

### [Description of the Drawings]

FIG. 1 is a longitudinal cross-sectional view showing an all-solid rechargeable battery according to an embodiment.
FIG. 2 is a longitudinal cross-sectional view showing that a lithium metal layer is formed in the all-solid rechargeable battery according to the embodiment.
FIG. 3 is a longitudinal cross-sectional view showing an all-solid rechargeable battery according to a first embodiment of the present invention.
FIG. 4 is a longitudinal cross-sectional view showing an all-solid rechargeable battery according to a second embodiment of the present invention.
FIG. 5 is a graph showing a temperature relationship over time during nail penetration through an all-solid rechargeable battery.
FIG. 6 is a graph showing a voltage relationship over time during nail penetration through an all-solid rechargeable battery.
FIG. 7 is a longitudinal cross-sectional view showing an all-solid rechargeable battery according to a third embodiment of the present invention.
FIG. 8 is a plan view showing a position of a laminate where a penetration pin penetrates during a penetration test in Experimental Examples 11 to 14 of the present invention and Comparative Example 2.
FIG. 9 is a graph showing temperature changes over time at a central portion where the penetration pin penetrates and a peripheral portion in Experimental Examples 11 and 12 during a test of FIG. 7.

### [Mode for Invention]

In the following detailed description, only certain embodiments of the present invention have been shown and described, simply by way of illustration. As those skilled in the art would realize, the described embodiments may be modified in various different ways, all without departing from the spirit or scope of the present invention.

In addition, unless explicitly described to the contrary, the word "comprise", and variations such as "comprises" or "comprising", will be understood to imply the inclusion of stated elements but not the exclusion of any other elements.

In the drawings, the thickness of layers, films, panels, regions, etc., are exaggerated for clarity, and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface. Here, "or" is not to be construed as an exclusive meaning, and for example, "A or B" is construed to include A, B, A+B, and the like.

### Positive Electrode for All-Solid Rechargeable Battery

An embodiment provides a positive electrode for an all-solid rechargeable battery including a current collector and a positive electrode active material layer positioned on the current collector, wherein the positive electrode active material layer includes at least one of a positive electrode active material, a sulfide-based solid electrolyte, a binder, and a conductive material. However, without being limited thereto, a positive electrode for the all-solid rechargeable battery may include more or fewer components than the components described above.

In an embodiment, a positive electrode for the all-solid rechargeable battery is manufactured by applying a positive electrode composition including at least one of a positive electrode active material, a sulfide-based solid electrolyte, a binder, and a conductive material to a current collector, followed by drying and rolling.

### Positive Electrode Active Material

The positive electrode active material can be applied without limitation as long as it is commonly used for all-solid secondary batteries. For example, the positive electrode active material may be a compound capable of reversible intercalation and deintercalation of lithium and may include a compound represented by any one of the following chemical formulas.

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}D_{α} (0.90 ≤ a ≤1.8, 0 ≤ b ≤ 0.5, 0 ≤ c ≤ 0.5, 0 <α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 <α <2);

LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 <α <2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 <α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 <α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 <α < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li _{(3-f)}J₂ PO₄₃ (0 ≤ f ≤ 2);

Li _{(3-f)}Fe₂ PO₄₃ (0 ≤ f ≤ 2);

LiₐFePO₄ (0.90 ≤ a ≤ 1.8).

In the above Chemical Formulas, A is selected from the group consisting of Ni, Co, Mn, and a combination thereof; X is selected from the group consisting of Al, Ni, Co, Mn, Cr, Fe, Mg, Sr, V, rare earth elements, and a combination thereof; D is selected from the group consisting of O, F, S, P, and a combination thereof; E is selected from the group consisting of Co, Mn, and a combination thereof; T is selected from the group consisting of F, S, P, and a combination thereof; G is selected from the group consisting of Al, Cr, Mn, Fe, Mg, La, Ce, Sr, V, and a combination thereof; Q is selected from the group consisting of Ti, Mo, Mn, and a combination thereof; Z is selected from the group consisting of Cr, V, Fe, Sc, Y, and a combination thereof; and J is selected from the group consisting of V, Cr, Mn, Co, Ni, Cu, and a combination thereof.

The positive electrode active material may be, for example, lithium cobalt oxide (LCO), lithium nickel oxide (LNO), lithium nickel cobalt oxide (NC), lithium nickel cobalt aluminum oxide (NCA), lithium nickel cobalt manganese oxide (NCM), and lithium nickel manganese oxide (NM), lithium manganese oxide (LMO), or lithium ferrous phosphate oxide (LFP).

The positive electrode active material may include a lithium nickel-based oxide represented by Chemical Formula 1 below, a lithium cobalt-based oxide represented by Chemical Formula 2 below, a lithium ferrous phosphate-based compound represented by Chemical Formula 3 below, or a combination thereof.

[Chemical Formula 1] Liₐ₁Niₓ₁M¹_{y1}M²_{1-x1-y1}O₂

In Chemical Formula 1, 0.9≤a1≤1.8, 0.3≤x1≤1, 0≤y1≤0.7, and M1 and M2 are each one or more elements independently selected from the group consisting of Al, B, Ba, Ca, Ce, Co, Cr, Cu, F, Fe, Mg, Mn, Mo, Nb, P, S, Si, Sr, Ti, V, W, and Zr.

[Chemical Formula 2] Liₐ₂Coₓ₂M³₁₋ₓ₂O₂

In Chemical Formula 2, 0.9≤a2≤1.8, 0.6≤x2≤1, and M3 is one or more elements selected from the group consisting of Al, B, Ba, Ca, Ce, Cr, Cu, F, Fe, Mg, Mn, Mo, Nb, P, S, Si, Sr, Ti, V, W, and Zr.

[Chemical Formula 3] Liₐ₃Feₓ₃M⁴₁₋ₓ₃PO₄

In Chemical Formula 3, 0.9≤a3≤1.8, 0.6≤x3≤1, and M4 is one or more elements selected from the group consisting of Al, B, Ba, Ca, Ce, Co, Cr, Cu, F, Fe, Mg, Mn, Mo, Nb, P, S, Si, Sr, Ti, V, W, and Zr.

An average particle diameter (D50) of the positive electrode active material may be 1 µm to 25 µm, for example, 3 µm to 25 µm, 5 µm to 25 µm, 5 µm to 20 µm, 8 µm to 20 µm, or 10 µm to 18 µm. The positive electrode active material having the particle diameter range can be harmoniously mixed with other components in the positive electrode active material layer and can implement the high capacity and high energy density.

The positive electrode active material may be in the form of a secondary particle made by agglomeration of a plurality of primary particles, or may be in the form of a single particle. In addition, the positive electrode active material may be spherical or close to a spherical shape, or may be polyhedral or amorphous.

### Sulfide-Based Solid Electrolyte

The sulfide-based solid electrolyte may include, for example, Li₂S-P₂S₅, Li₂S-P₂S₅-LiX (X is a halogen element, for example I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each an integer, and Z is Ge, Zn, or Ga), Li₂S-GeS₂, Li₂S-SiS₂-Li₃PO₄, Li₂S-SiS₂-LiₚMO_{q} (p and q are integers, and M is P, Si, Ge, B, Al, Ga, or In), or a combination thereof.

The sulfide-based solid electrolyte may be obtained by, for example, mixing Li₂S and P₂S₅ at a molar ratio of 50:50 to 90:10 or 50:50 to 80:20 and optionally heat treating the mixture. Within the above mixing ratio range, a sulfide-based solid electrolyte having excellent ionic conductivity can be manufactured. Here, SiS₂, GeS₂, B₂S₃ and the like as other components may be further included to further improve the ionic conductivity.

A mechanical milling or solution method can be applied as a method of mixing sulfur-containing raw materials for producing a sulfide-based solid electrolyte. The mechanical milling is a method of making starting materials into particulates and mixing the same by putting the starting materials, ball mills, and the like in a reactor and intensely stirring them. In the solution method, starting materials may be mixed in a solvent to obtain a solid electrolyte as a precipitate. Furthermore, if heat treatment is performed after mixing, crystals of the solid electrolyte can become more rigid and ionic conductivity can be improved. As an example, the sulfide-based solid electrolyte can be manufactured by mixing sulfur-containing raw materials and heat-treating them two or more times. In this case, a sulfide-based solid electrolyte with high ionic conductivity and rigidity can be manufactured.

As an example, the sulfide-based solid electrolyte particles may include argyrodite-type sulfide. The argyrodite-type sulfide can be represented by, for example, Chemical Formula of LiₐM_{b}P_{c}S_{d}Aₑ (a, b, c, d, and e are all 0 or greater and 12 or less, M is metal excluding Li or a combination of a plurality of metals excluding Li, and A is F, Cl, Br, or I), and specifically, can be represented by Chemical Formula of Li₇₋ₓPS₆₋ₓAₓ (x is 0.2 or greater and 1.8 or less, and A is F, Cl, Br, or I). The argyrodite-type sulfide may be specifically Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8} or the like.

A sulfide-based solid electrolyte particle containing such argyrodite-type sulfide has high ionic conductivity close to about 10⁻⁴ to about 10⁻² S/cm, which is ionic conductivity of a general liquid electrolyte, at room temperature, and thus, can form a close bond between the positive electrode active material and the solid electrolyte, and further, a close interface between the electrode layer and the solid electrolyte layer without deteriorating the ionic conductivity. An all-solid battery including the same may exhibit improved battery performance such as rate characteristics, coulombic efficiency, and life characteristics.

The argyrodite-type sulfide-based solid electrolyte can be manufactured by, for example, mixing lithium sulfide, phosphorus sulfide, and optionally lithium halide. After mixing them, heat treatment may be performed. The heat treatment may include, for example, two or more heat treatment steps.

An average particle diameter (D50) of the sulfide-based solid electrolyte particle according to an embodiment may be 5.0 µm or less, for example, 0.1 µm to 5.0 µm, 0.1 µm to 4.0 µm, 0.1 µm to 3.0 µm, 0.5 µm to 2.0 µm, or 0.1 µm to 1.5 µm. Alternatively, the sulfide-based solid electrolyte particle may be a small particle having an average particle diameter (D50) of 0.1 µm to 1.0 µm or a large particle having an average particle diameter (D50) of 1.5 µm to 5.0 µm, depending on the location or purpose of use. The sulfide-based solid electrolyte particle in the particle diameter range can effectively penetrate between solid particles in the battery, and has an excellent contact property with the electrode active material and connectivity between the solid electrolyte particles. The average particle diameter of the sulfide-based solid electrolyte particle may be measured using a microscope image. For example, a particle size distribution may be obtained by measuring sizes of about 20 particles in a scanning electron microscope image, and D50 may be calculated from the particle size distribution.

The content of the solid electrolyte in the positive electrode for an all-solid battery may be 0.5 wt% to 35 wt%, for example, 1 wt% to 35 wt%, 5 wt% to 30 wt%, 8 wt% to 25 wt%, or 10 wt% to 20 wt%. This is a content with respect to a total weight of components in the positive electrode, and specifically, may be a content with respect to a total weight of the positive electrode active material layer.

In an embodiment, the positive electrode active material layer may include 50 wt% to 99.35 wt% of the positive electrode active material, 0.5 wt% to 35 wt% of the sulfide-based solid electrolyte, 0.1 wt% to 10 wt% of the fluorine-based resin binder, and 0.05 wt% to 5 wt% of the vanadium oxide with respect to 100 wt% of the positive electrode active material layer. When such a content range is satisfied, the positive electrode for an all-solid rechargeable battery maintains high adhesive force and also maintains the viscosity of the positive electrode composition at an appropriate level while implementing high capacity and high ionic conductivity, thereby improving processability.

### Binder

The binder serves to adhere positive electrode active material particles to each other and to a current collector. Representative examples may include, but are not limited to, polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like.

### Conductive Material

The positive electrode active material layer may further include a conductive material. The conductive material is used to provide conductivity to an electrode, and may include, for example, a carbon-based material such as natural graphite, artificial graphite, carbon black, acetylene black, Ketjen black, a carbon fiber, and a carbon nanotube; a metal-based material in the form of metal powder or metal fiber containing copper, nickel, aluminum, silver, and the like; a conductive polymer such as a polyphenylene derivative; or a combination thereof.

The conductive material may be included in an amount of 0.1 wt% to 5 wt%, or 0.1 wt% to 3 wt% with respect to a total weight of each component of the positive electrode for the all-solid battery, or with respect to a total weight of the positive electrode active material layer. Within the above content range, the conductive material can improve electrical conductivity without deteriorating battery performance.

When the positive electrode active material layer further includes a conductive material, the positive electrode active material layer may include 45 wt% to 99.25 wt% of the positive electrode active material, 0.5 wt% to 35 wt% of the sulfide-based solid electrolyte, 0.1 wt% to 10 wt% of the fluorine-based resin binder, 0.05 wt% to 5 wt% of the vanadium oxide, and 0.1 wt% to 5 wt% of the conductive material with respect to 100 wt% of the positive electrode active material layer.

Note that the positive electrode for a lithium rechargeable battery may further include an oxide-based inorganic solid electrolyte, in addition to the solid electrolyte described above. The oxide-based inorganic solid electrolyte may include, for example, Li₁₊ₓTi₂₋ₓAl(PO₄)₃(LTAP)(0≤x≤4), Li_{1+x+y}AlₓTi₂₋ₓSi_{y}P_{3-y}O₁₂(0<x<2, 0≤y<3), BaTiO₃, Pb(Zr,Ti)O₃(PZT), Pb₁₋ₓLaₓZr_{1-y}Ti_{y}O₃(PLZT)(0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, garnet-based ceramics Li₃₊ₓLa₃M₂O₁₂ (M= Te, Nb, or Zr; x is an integer from 1 to 10), or a combination thereof.

### All-Solid Rechargeable Battery

An embodiment provides an all-solid rechargeable battery including the positive electrode described above, a negative electrode, and a solid electrolyte layer positioned between the positive electrode and the negative electrode. The all-solid rechargeable battery may also be expressed as an all-solid battery or an all-solid lithium rechargeable battery.

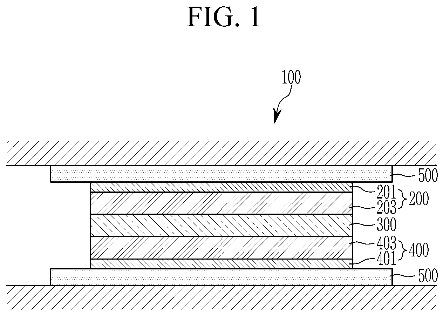

FIG. 1 is a cross-sectional view of an all-solid rechargeable battery according to an embodiment. Referring to FIG. 1, an all-solid rechargeable battery 100 may have such a structure that an electrode assembly in which a negative electrode 400 including a negative electrode current collector 401 and a negative electrode active material layer 403, a solid electrolyte layer 300, and a positive electrode 200 including a positive electrode active material layer 203 and a positive electrode current collector 201 are stacked is stored in a case such as a pouch. The all-solid rechargeable battery 100 may further include an elastic layer 500 on an outer side of at least one of the positive electrode 200 and the negative electrode 400. Although FIG. 1 shows one electrode assembly including the negative electrode 400, the solid electrolyte layer 300, and the positive electrode 200, an all-solid battery can be manufactured by stacking two or more electrode assemblies.

### Negative Electrode

The negative electrode for an all-solid battery may include, for example, a current collector and a negative electrode active material layer positioned on the current collector. The negative electrode active material layer includes a negative electrode active material and may further include a binder, a conductive material, and/or a solid electrolyte.

The negative electrode active material may include a material capable of reversibly intercalation/deintercalating lithium ions, lithium metal, an alloy of lithium metal, a material capable of being doped and undoped on lithium, or a transition metal oxide.

The material capable of reversibly intercalating/deintercalating lithium ions is a carbon-based negative electrode active material, and may include, for example, crystalline carbon, amorphous carbon, or a combination thereof. Examples of the crystalline carbon may include graphite such as amorphous, plate-like, flake-like, spherical or fibrous natural graphite or artificial graphite, and examples of the amorphous carbon may include soft carbon or hard carbon, mesophase pitch carbide, fired coke, and the like.

For the alloy of the lithium metal, an alloy of lithium and one or more metal selected from Na, K, Rb, Cs, Fr, Be, Mg, Ca, Sr, Si, Sb, Pb, In, Zn, Ba, Ra, Ge, Al and Sn may be used.

For the material capable of being doped or undoped on the lithium, a Si-based negative electrode active material or an Sn-based negative electrode active material may be used. Examples of the Si-based negative electrode active material may include silicon, silicon-carbon composite, SiOₓ (0<x≤2), and a Si-Q alloy (Q is an element selected from the group consisting of alkali metals, alkali earth metals, Group 13 elements, Group 14 elements, Group 15 elements, Group 16 elements, transition metals, rare-earth elements, and combinations thereof, but is not Si). Examples of the Sn-based negative electrode active material may include Sn, SnO₂, a Sn-R alloy (R is an element selected from the group consisting of alkali metals, alkali earth metals, Group 13 elements, Group 14 elements, Group 15 elements, Group 16 elements, transition metals, rare-earth elements, and combinations thereof, but is not Sn). In addition, a mixture of at least one thereof and SiO₂ may be used. The elements Q and R may be selected and used from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and a silicon particle and an amorphous carbon coating layer positioned on a surface of the core. The crystalline carbon may be artificial graphite, natural graphite, or a combination thereof. As the amorphous carbon precursor, coal-based pitch, mesophase pitch, petroleum-based pitch, coal-based oil, petroleum-based heavy oil, or polymer resin such as phenol resin, furan resin, and polyimide resin can be used. In this case, a content of silicon may be 10 wt% to 50 wt% with respect to a total weight of the silicon-carbon composite. In addition, a content of the crystalline carbon may be 10 wt% to 70 wt% with respect to the total weight of the silicon-carbon composite, and a content of the amorphous carbon may be 20 wt% to 40 wt% with respect to the total weight of the silicon-carbon composite. In addition, a thickness of the amorphous carbon coating layer may be 5 nm to 100 nm.

An average particle diameter (D50) of the silicon particle may be 10 nm to 20 µm, and for example, 10 nm to 500 nm. The silicon particle may be present in an oxidized form, and in this case, an atomic content ratio of Si:O in the silicon particle, which indicates a degree of oxidation, may be 99:1 to 33:67. The silicon particle may be a SiOₓ particle, in which case a range of x in SiOx may be greater than 0 and less than 2. Here, the average particle diameter (D50) is measured with a particle size analyzer using a laser diffraction method and refers to a diameter of a particle with a cumulative volume of 50% by volume in the particle size distribution.

The Si-based negative electrode active material or Sn-based negative electrode active material may be used by mixing with a carbon-based negative electrode active material. A mixing ratio of the Si-based negative electrode active material or Sn-based negative electrode active material and the carbon-based negative electrode active material may be 1:99 to 90:10 at a weight ratio.

A content of the negative electrode active material in the negative electrode active material layer may be 95 wt% to 99 wt% with respect to the total weight of the negative electrode active material layer.

In an embodiment, the negative electrode active material layer further includes a binder, and optionally, may further include a conductive material. A content of the binder in the negative electrode active material layer may be 1 wt% to 5 wt% with respect to the total weight of the negative electrode active material layer. In addition, when a conductive material is further included, the negative electrode active material layer may include 90 wt% to 98 wt% of the negative electrode active material, 1 wt% to 5 wt% of the binder, and 1 wt% to 5 wt% of the conductive material.

The binder serves to adhere the negative electrode active material particles to each other well and also to adhere the negative electrode active material to the current collector well. The binder may include a water-insoluble binder, a water-soluble binder, or a combination thereof.

Examples of the water-insoluble binder may include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

Examples of the water-soluble binder may include a rubber-based binder or a polymer resin binder. The rubber-based binder may be selected from a styrene-butadiene rubber, an acrylated styrene-butadiene rubber, an acrylonitrile-butadiene rubber, an acrylic rubber, a butyl rubber, a fluoro rubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a thickener capable of imparting viscosity may be used together, and the thickener may include, for example, a cellulose-based compound. The cellulose-based compound may include carboxymethyl cellulose, hydroxypropylmethyl cellulose, methyl cellulose, alkali metal salts thereof, or a combination thereof. As the alkali metal, Na, K, or Li may be used. An amount of the thickener used may be 0.1 to 3 parts by weight with respect to 100 parts by weight of the negative electrode active material.

The conductive material is used to provide conductivity to an electrode, and may include, for example, a carbon-based material such as natural graphite, artificial graphite, carbon black, acetylene black, Ketjen black, a carbon fiber, and a carbon nanotube; a metal-based material in the form of metal powder or metal fiber including copper, nickel, aluminum, silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

As another example, the negative electrode for an all-solid battery may be a precipitation-type negative electrode. The precipitation-type negative electrode refers to a negative electrode which does not include a negative electrode active material during assembling of a battery but in which lithium metal or the like is precipitated during charging of the battery and serves as a negative electrode active material.

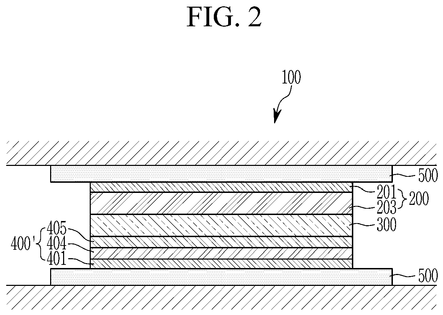

FIG. 2 is a schematic cross-sectional view of an all-solid rechargeable battery including a precipitation-type negative electrode according to an embodiment. Referring to FIG. 2, the precipitation-type negative electrode 400' may include a current collector 401 and a negative electrode coating layer 405 positioned on the current collector. In an all-solid battery having the precipitation-type negative electrode 400', initial charging begins in the absence of a negative electrode active material, and during the charging, lithium metal with a high density or the like is precipitated between the current collector 401 and the negative electrode coating layer 405 and forms a lithium metal layer 404, which can serve as a negative electrode active material. Accordingly, in an all-solid battery that has been charged once or more, the precipitation-type negative electrode 400' may include the current collector 401, the lithium metal layer 404 positioned on the current collector, and the negative electrode coating layer 405 positioned on the metal layer. The lithium metal layer 404 refers to a layer of lithium metal or the like precipitated during the charging process of the battery and may be called a metal layer or a negative electrode active material layer.

The negative electrode coating layer 405 may include metal, a carbon material, or a combination thereof that serves as a catalyst.

The metal may include, for example, gold, platinum, palladium, silicon, silver, aluminum, bismuth, tin, zinc, or a combination thereof, and may be composed of one selected therefrom or an alloy of more than one thereof. When the metal is present in the form of a particle, an average particle diameter (D50) thereof may be about 4 µm or less, for example, 10 nm to 4 µm.

The carbon material may be, for example, crystalline carbon, amorphous carbon, or a combination thereof. The crystalline carbon may be, for example, natural graphite, artificial graphite, a mesophase carbon microbead, or a combination thereof. The amorphous carbon may be, for example, carbon black, activated carbon, acetylene black, Denka black, Ketjen black, or a combination thereof.

When the negative electrode coating layer 405 includes both the metal and the carbon material, a mixing ratio of the metal and the carbon material may be, for example, 1:10 to 2:1 at a weight ratio. In this case, the precipitation of lithium metal can be effectively promoted and the characteristics of the all-solid battery can be improved. The negative electrode coating layer 405 may include, for example, a carbon material on which catalyst metal is supported, or a mixture of metal particles and carbon material particles.

The negative electrode coating layer 405 may include, for example, the metal and amorphous carbon, and in this case, the precipitation of lithium metal can be effectively promoted.

The negative electrode coating layer 405 may further include a binder, and the binder may be a conductive binder. Furthermore, the negative electrode coating layer 405 may further include general additives such as a filler, a dispersant, and an ion conductive material.

A thickness of the negative electrode coating layer 405 may be, for example, 100 nm to 20 µm, 500 nm to 10 µm, or 1 µm to 5 µm.

For example, the precipitation-type negative electrode 400' may further include a thin film on the surface of the current collector, that is, between the current collector and the negative electrode coating layer. The thin film may contain an element that can form an alloy with lithium. The element that can form an alloy with lithium may be, for example, gold, silver, zinc, tin, indium, silicon, aluminum, bismuth, and the like, which may be used alone or as an alloy of more than one thereof. The thin film can further planarize a precipitation shape of the lithium metal layer 404 and further improve the characteristics of the all-solid battery. The thin film may be formed by, for example, a vacuum deposition method, a sputtering method, a plating method, or the like. The thin film may have a thickness ranging from 1 nm to 500 nm, for example.

### Solid Electrolyte Layer

The solid electrolyte layer 300 may include a sulfide-based solid electrolyte, an oxide-based solid electrolyte, and the like. The specific description of the sulfide-based solid electrolyte and the oxide-based solid electrolyte are the same as above.

In one example, the solid electrolyte included in the positive electrode 200 and the solid electrolyte included in the solid electrolyte layer 300 may include the same compound or different compounds. For example, when both the positive electrode 200 and the solid electrolyte layer 300 include an argyrodite-type sulfide-based solid electrolyte, the overall performance of the all-solid rechargeable battery may be improved. Furthermore, as an example, when both the positive electrode 200 and the solid electrolyte layer 300 include the coated solid electrolyte described above, the all-solid rechargeable battery can implement excellent initial efficiency and life characteristics while implementing a high capacity and a high energy density.

Note that an average particle diameter (D50) of the solid electrolyte layer included in the positive electrode 200 may be smaller than an average particle diameter (D50) of the solid electrolyte included in the solid electrolyte layer 300. In this case, the overall performance can be improved by maximizing the energy density of the all-solid battery and increasing the mobility of lithium ions. For example, the average particle diameter (D50) of the solid electrolyte included in the positive electrode 200 may be 0.1 µm to 1.0 µm, or 0.1 µm to 0.8 µm, and the average particle diameter (D50) of the solid electrolyte included in the solid electrolyte layer 300 may be 1.5 µm to 5.0 µm, 2.0 µm to 4.0 µm, or 2.5 µm to 3.5 µm. When the above particle diameter ranges are satisfied, the energy density of the all-solid rechargeable battery is maximized and the transfer of lithium ions is facilitated, making it possible to suppress resistance and thus to improve the overall performance of the all-solid rechargeable battery. Here, the average particle diameter (D50) of the solid electrolyte may be measured with a particle size analyzer using a laser diffraction method. Alternatively, a particle size distribution may be obtained by measuring sizes of about 20 particles selected from a microscope image such as a scanning electron microscope, and a D50 value may be calculated from the particle size distribution.

The solid electrolyte layer may further include a binder, in addition to the solid electrolyte. In this case, for the binder, a styrene butadiene rubber, polytetrafluoroethylene, polyvinylidene fluoride, polyethylene, an acrylate-based polymer, or a combination thereof may be used, but the present invention is not limited thereto, and any binder used in the art can be used. The acrylate-based polymer may be, for example, butyl acrylate, polyacrylate, polymethacrylate, or a combination thereof.

The solid electrolyte layer may be formed by adding a solid electrolyte to a binder solution, coating a base film with the solution, and drying the resultant. A solvent for the binder solution may be isobutyryl isobutyrate, xylene, toluene, benzene, hexane, or a combination thereof. A process of forming the solid electrolyte layer is widely known in the art, and therefore, a detailed description will be omitted.

A thickness of the solid electrolyte layer may be, for example, 10 µm to 150 µm.

The solid electrolyte layer may further include an alkali metal salt, and/or an ionic liquid, and/or a conductive polymer.

The alkali metal salt may be, for example, a lithium salt. A content of the lithium salt in the solid electrolyte layer may be 1 M or more, for example, 1 M to 4 M. In this case, the lithium salt can improve ionic conductivity by improving lithium ion mobility in the solid electrolyte layer.

The lithium salt may include, for example, LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), lithium bis(oxalato) borate (LiBOB), lithium oxalyldifluoroborate (LIODFB), lithium difluoro(oxalato) borate (LiDFOB), lithium bis(trifluoro methanesulfonyl)imide (LiTFSI, LiN(SO₂CF₃)₂), lithium bis(fluorosulfonyl)imide (LiFSI, LiN(SO₂F)₂), LiCF₃SO₃, LiAsF₆, LiSbF₆, LiClO₄, or a mixture thereof.

Furthermore, the lithium salt may be an imide-based salt. For example, the imide-based lithium salt may include lithium bis(trifluoro methanesulfonyl)imide (LiTFSI, LiN(SO₂CF₃)₂) and lithium bis(fluorosulfonyl)imide (LiFSI, LiN(SO₂F)₂). The lithium salt can maintain or improve ionic conductivity by appropriately maintaining chemical reactivity with an ionic liquid.

The ionic liquid refers to a salt or a room temperature molten salt that has a melting point equal to or lower than a room temperature, is in a liquid state at room temperature and is composed of only ions.

The ionic liquid may be a compound including a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, and triazolium-based cations and a mixture thereof, and b) one or more anions selected from BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, (FSO₂)₂N-, (C₂F₅SO₂)2N-, (C₂F₅SO₂)(CF₃SO₂)N-, and (CF₃SO₂)₂N-
The ionic liquid may be, for example, one or more selected from the group consisting of N-methyl-N-propylpyrrolidinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)amide, and 1-ethyl-3-methylimidazolium bis(trifluoromethylsulfonyl)amide.

A weight ratio of the solid electrolyte and the ionic liquid in the solid electrolyte layer may be 0.1:99.9 to 90:10, for example, 10:90 to 90:10, 20:80 to 90:10, 30:70 to 90: 10, 40:60 to 90:10, or 50:50 to 90:10. The solid electrolyte layer that satisfies the above range can maintain or improve ionic conductivity by improving an electrochemical contact area with the electrode. Accordingly, the energy density, discharge capacity, rate characteristics, and the like of the all-solid battery can be improved.

The all-solid battery may be a unit battery having a structure of a positive electrode/a solid electrolyte layer/a negative electrode, a bicell having a structure of a positive electrode/a solid electrolyte layer/a negative electrode/a solid electrolyte layer/a positive electrode, or a stacked battery in which the structure of the unit cell is repeated.

A shape of the all-solid battery is not particularly limited, and may be, for example, a coin type, a button type, a sheet type, a stack type, a cylindrical shape, a flat type, or the like. In addition, the all-solid battery may also be applied to large-sized batteries used in electric vehicles, and the like. For example, the all-solid battery may also be used in a hybrid vehicle such as a plug-in hybrid electric vehicle (PHEV). Furthermore, it can be used in fields that require a large amount of power storage, and for example, can also be used to an electric bicycle, an electric tool or the like.

An embodiment is an all-solid rechargeable battery using a sulfide-based solid electrolyte. Since the solid electrolyte cannot be used while exposed to the atmosphere due to its nature, the solid electrolyte needs to be blocked from the atmosphere. To this end, the all-solid rechargeable battery is manufactured by inserting it into an exterior body using a laminated film or a rigid material.

However, since a negative electrode, a solid electrolyte layer, a positive electrode, and an elastic sheet are stacked on the laminated film, the alignment of the stacked elastic sheet may be misaligned during a vacuum process upon sealing. Additionally, it may be difficult to provide uniform pressure to the negative electrode/solid electrolyte layer/positive electrode due to the presence of bubbles during stacking.

If the all-solid rechargeable battery is not uniformly pressurized from the outside during discharging, a migration speed of lithium ions may decrease, lowering discharge efficiency. If the battery is locally pressurized, lithium ions may move to the pressurized region, lowering discharge efficiency.

An embodiment makes it possible to increase coulombic efficiency even when the thickness of the negative electrode varies due to charging and discharging. To this end, an embodiment is configured to eliminate generation of air bubbles between the laminate of the negative electrode, solid electrolyte layer, and positive electrode and the elastic sheet. Additionally, an embodiment is configured to eliminate generation of air bubbles between unit cells when stacking a plurality of unit cells.

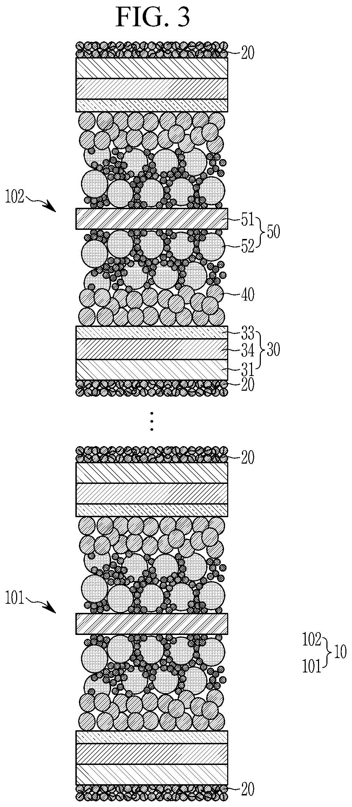

FIG. 3 is a longitudinal cross-sectional view showing an all-solid rechargeable battery according to a first embodiment of the present invention. Referring to FIG. 3, the all-solid rechargeable battery of the first embodiment includes unit cells 10 and ceramic insulating layers 20. The unit cells 10 are each formed by stacking a negative electrode 30, a solid electrolyte layer 40, and a positive electrode 50. The all-solid rechargeable battery of FIG. 3 is formed to have a bicell structure.

Each of the unit cells 10 has the positive electrode 50 in the middle in a stacking direction, the solid electrolyte layers 40 on upper and lower sides of the positive electrode 50, and the negative electrode 30 on the solid electrolyte layer 40. The positive electrode 50 includes a positive electrode current collector 51 and positive electrode active material layers 52 stacked on both surfaces of the positive electrode current collector 51. The negative electrode 30 includes a negative electrode current collector 31 and a negative electrode active material layer stacked on one surface thereof.

Therefore, each of the unit cells 10 is formed by placing the positive electrode current collector 51 in the middle in the stacking direction, and sequentially stacking the positive electrode active material layer 52, the solid electrolyte layer 40, the negative electrode active material layer, and the negative electrode current collector 31 on each of both surfaces of the positive electrode current collector.

As shown in FIG. 3, when the negative electrode 30 is a precipitation-type negative electrode, it may include a negative electrode coating layer 33 positioned on the negative electrode current collector 31. The initial charging begins in the absence of a negative electrode active material, and during the charging, lithium metal with a high density or the like is precipitated between the negative electrode current collector 31 and the negative electrode coating layer 33 and forms a lithium metal layer 34, which can serve as a negative electrode active material layer.

Accordingly, in an all-solid battery that has been charged once or more, the precipitation-type negative electrode 30 may include the negative electrode current collector 31, the lithium metal layer 34 positioned on the negative electrode current collector 31, and the negative electrode coating layer 33 positioned on the lithium metal layer 34. The lithium metal layer 34 refers to a layer of lithium metal or the like precipitated during the charging process of the battery and may be called a metal layer or a negative electrode active material layer.

The unit cells 10 are stacked in a direction in which the negative electrode 30, the solid electrolyte layer 40, and the positive electrode 50 are stacked. The unit cells 10 are formed at least two and arranged adjacent to each other.

The ceramic insulating layers 20 are arranged between the negative electrodes 30 of the unit cells 10 adjacent to each other and are stacked on the negative electrodes 30 positioned on both outermost sides of the unit cells 10. For example, the first cell 101 of the adjacent unit cells 10 includes the positive electrode active material layer 52, the solid electrolyte layer 40, the lithium metal layer 34 serving as a negative electrode active material layer, and the negative electrode current collector 31 sequentially stacked on each of both surfaces of the positive electrode current collector 51.

The second cell 102 adjacent to the first cell 101 includes the positive electrode active material layer 52, the solid electrolyte layer 40, the lithium metal layer 34 serving as a negative electrode active material layer, and the negative electrode current collector 31 sequentially stacked on each of both surfaces of the positive electrode current collector 51. In this case, the ceramic insulating layers 20 positioned between the first cell 101 and the second cell 102 among the ceramic insulating layers 20 are arranged as a single layer between the pair of negative electrode current collectors 31 and 31.

The ceramic insulating layers 20 are provided on sides of the negative electrodes 30 opposite to the solid electrolyte layers 40. When the all-solid rechargeable battery is damaged due to an external force, for example, penetration or collision, the positive electrode 50 and the negative electrode 30 may be electrically short-circuited. At this time, the ceramic insulating layers 20 protect the unit cells 10, as functional layers on the outermost sides of the unit cells 10, thereby reducing an amount of heat generation of the unit cells 10.

When forming an all-solid rechargeable battery by stacking a plurality of unit cells 10, the ceramic insulating layers 20 are arranged between the unit cells 10, preventing the positive electrodes 50 and negative electrodes 30 of the unit cells 10 adjacent to each other from directly contacting each other beyond the respective unit cells 10. As a result, thermal runaway due to collapse of the positive electrode active material layer 52 and the lithium metal layer 34 serving as the negative electrode active material layer can be prevented.

The ceramic insulating layers 20 can prevent a direct short circuit between the positive electrode 50 and the negative electrode 30 when the cell is damaged due to an external impact, thereby reducing the amount of heat generation due to the short circuit. As an example, the ceramic insulating layer 20 is formed including ceramic particles and a binder. As an example, the ceramic particles may be made of alumina or boehmite.

The ceramic particles in the ceramic insulating layer 20 provide insulating properties to prevent a short circuit between the positive electrode 50 and the negative electrode 30.

Below, results of Experimental Examples 1 to 4 and Comparative Example 1, which confirmed a ratio of the binder to the ceramic particles forming the ceramic insulating layer 20 and a short-circuit resistance ratio indicating insulating properties accordingly, are shown in Table 1.

**(Table 1)**

| | Ceramic insulating layer | Thickness of ceramic insulating layer | Particle diameter (D50) of ceramic particles | Binder ratio | Short-circuit resistance ratio |
|---|---|---|---|---|---|
| Comparative Example 1 | Not applied | - | - | - | 1 |
| Experimental Example 1 | applied | 10 µm | 2 µm | 5 wt% | 123.58 |
| Experimental Example 2 | applied | 10 µm | 3 µm | 5 wt% | 133.77 |
| Experimental Example 3 | applied | 20 µm | 2 µm | 5 wt% | 658.65 |
| Experimental Example 4 | applied | 10 µm | 2 µm | 10.0 wt% | 137.3 |

As seen in Experimental Examples 1 to 3, the short-circuit resistance ratio indicating insulating properties is most affected by the thickness of the ceramic insulating layer 20. The thickness comparison of the ceramic insulating layer 20 can be confirmed by comparing Experimental Examples 1 and 3. The thickness of the ceramic insulating layer 20 can be implemented between at least 5 µm and 50 µm.

If the thickness is less than 5 µm, a meaningful short-circuit resistance ratio cannot be obtained due to lack of insulating properties. If the thickness exceeds at least 50 µm, the ceramic particles and binder are used excessively compared to securing additional insulating properties.

The thickness in Experimental Examples 1 to 4 was 10 µm to 20 µm. The thickness within the range of 10 µm to 20 µm enables an appropriate short-circuit resistance ratio to be obtained with appropriate amounts of ceramic particles and binder used. Compared to Comparative Example 1 in which the ceramic insulating layer was not applied, Experimental Examples 1 to 4 had a significantly greater short-circuit resistance ratio.

As an example, the ceramic insulating layer 20 includes 5 wt% to 10 wt% of the binder and 90 wt% to 95 wt% of the ceramic particles. The thickness comparison of the ceramic insulating layer 20 can be confirmed by comparing Experimental Examples 1 and 3. It can be seen that the thicker the ceramic insulating layer 20, the greater the short circuit resistance ratio.

Additionally, it can be seen from Experimental Examples 1 to 3 that the thicker the ceramic insulating layer 20, the greater the short circuit resistance ratio. The binder ratio did not have a significant effect on the experiment when it was 5 to 10 wt%.

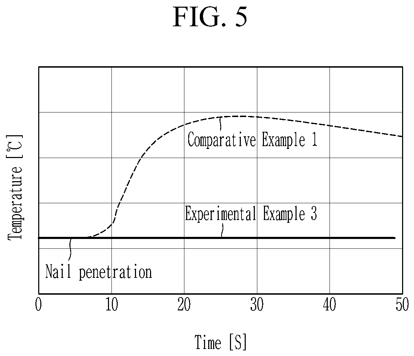

FIG. 5 is a graph showing a temperature relationship over time during nail penetration through an all-solid rechargeable battery. Referring to FIG. 5, Experimental Example 3 in which the ceramic insulating layer 20 was applied showed excellent penetration characteristics while showing that the temperature did not increase during the nail penetration, compared to Comparative Example 1 in which the ceramic insulating layer was not applied. The penetration evaluation conditions with respect to temperature are a room temperature, a diameter of a nail pin of 3 mm, and a penetration speed of the nail of 50 mm/sec.

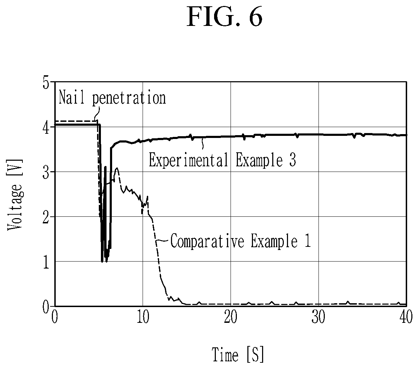

FIG. 6 is a graph showing a voltage relationship over time during nail penetration through an all-solid rechargeable battery. Referring to FIG. 6, Experimental Example 3 in which the ceramic insulating layer 20 was applied recovers and maintains a slightly lower voltage level than before nail penetration when the nail penetrates, and shows excellent penetration characteristics, compared to Comparative Example 1 in which the ceramic insulating layer was not applied. The penetration evaluation conditions with respect to voltage are a room temperature, a diameter of a nail pin of 3 mm, and a penetration speed of the nail of 50 mm/sec.

In this way, when the ceramic insulating layer 20 is applied, the short circuit resistance ratio increases, which means that safety increases. That is, as the short-circuit resistance ratio increases, the penetration performance and collision performance improve.

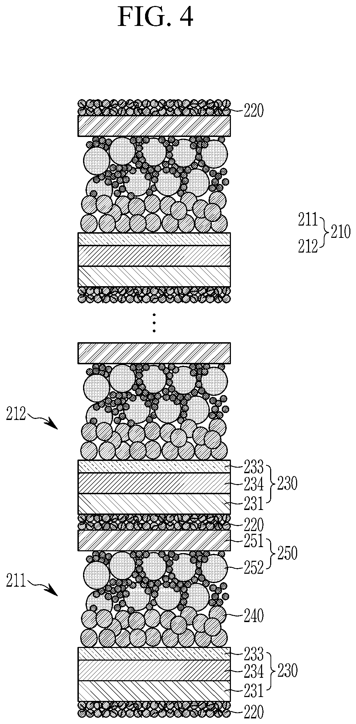

FIG. 4 is a longitudinal cross-sectional view showing an all-solid rechargeable battery according to a second embodiment of the present invention. Referring to FIG. 4, each of the unit cells 210 includes a solid electrolyte layer 240 provided on one side of a positive electrode 250, and a negative electrode 230 on the solid electrolyte layer 240. The positive electrode 250 includes a positive electrode current collector 251 and a positive electrode active material layer 252 stacked on one surface of the positive electrode current collector 251. The negative electrode 230 includes a negative electrode current collector 231 and a lithium metal layer 234 stacked on one surface of the negative electrode current collector 231 and serving as a negative electrode active material layer.

Therefore, each of the unit cells 210 is formed by sequentially stacking, on one surface of the positive electrode current collector 251, the positive electrode active material layer 252, the solid electrolyte layer 240, a negative electrode coating layer 233, the lithium metal layer 234 serving as a negative electrode active material layer and formed by precipitation of lithium metal during charging, and the negative electrode current collector 231.

The unit cells 210 are stacked in a direction in which the negative electrode 230, the solid electrolyte layer 240, and the positive electrode 250 are stacked. The unit cells 210 are formed at least two and arranged adjacent to each other.

The ceramic insulating layers 220 are arranged between the positive electrode 250 and the negative electrode 230 of the unit cells 210 adjacent to each other and are stacked on the negative electrodes 230 positioned on both outermost sides of the unit cells 210. For example, the first cell 211 of the adjacent unit cells 210 includes the positive electrode active material layer 252, the solid electrolyte layer 240, the negative electrode coating layer 233, the lithium metal layer 234 serving as a negative electrode active material layer, and the negative electrode current collector 231 sequentially stacked on one surface of the positive electrode current collector 251.

The second cell 212 adjacent to the first cell 211 includes the positive electrode active material layer 252, the solid electrolyte layer 240, the negative electrode coating layer 233, the lithium metal layer 234 serving as a negative electrode active material layer, and the negative electrode current collector 231 sequentially stacked on one surface of the positive electrode current collector 251. In this case, the ceramic insulating layer 220 positioned between the positive electrode current collector 251 of the first cell 211 and the negative electrode current collector 231 of the second cell 212 among the ceramic insulating layers 220 is arranged as a single layer.

The ceramic insulating layers 220 are provided on a side of the outermost negative electrode 230 opposite to the solid electrolyte layer 40 and on a side of the positive electrode 250 opposite to the solid electrolyte layer 40. When the all-solid rechargeable battery is damaged due to an external force, for example, penetration or collision, the positive electrode 250 and the negative electrode 230 may be electrically short-circuited. At this time, the ceramic insulating layers 220 protect the unit cells 210 as a functional layer on the outermost sides of the unit cells 210, thereby reducing an amount of heat generation of the unit cells 210.

When forming an all-solid rechargeable battery by stacking a plurality of unit cells 210, the ceramic insulating layers 220 are arranged between the unit cells 210, preventing the positive electrodes 250 and negative electrodes 230 of the cells 210 adjacent to each other from directly contacting each other beyond the respective unit cells 210. As a result, thermal runaway due to collapse of the positive electrode active material layer 252 and the lithium metal layer 234 serving as the negative electrode active material layer can be prevented.

When heat is generated in the unit cells 210, the ceramic insulating layers 220 assist heat dissipation and thus can effectively lower the temperature of the unit cells 210. As an example, the ceramic insulating layer 220 is formed including ceramic particles and a binder. As an example, the ceramic particles may be made of alumina or boehmite.

The ceramic particles in the ceramic insulating layer 220 provide insulating properties to prevent a short circuit between the positive electrode 250 and the negative electrode 230. The ceramic insulating layers 220 can prevent a direct short circuit between the positive electrode 250 and the negative electrode 230 when the cell is damaged due to an external impact, thereby reducing the amount of heat generation due to the short circuit.

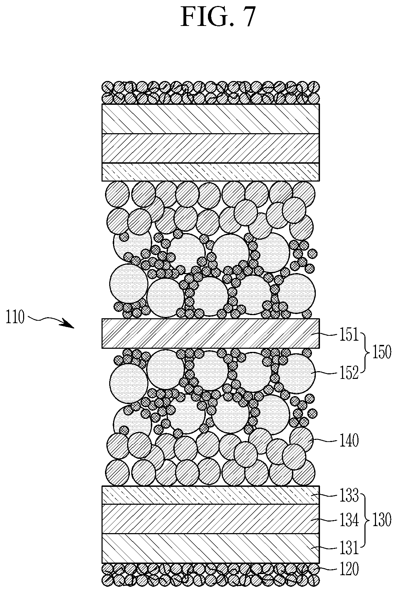

FIG. 7 is a longitudinal cross-sectional view showing an all-solid rechargeable battery according to a third embodiment of the present invention. Referring to FIG. 7, an all-solid rechargeable battery of an embodiment includes a laminate 110 and ceramic insulating layers 120. The laminate 110 is formed by stacking a negative electrode 130, a solid electrolyte layer 140, and a positive electrode 150. The all-solid rechargeable battery of FIG. 7 is formed to have a bicell structure.

The laminate 110 has the positive electrode 150 in the middle in a stacking direction, the solid electrolyte layers 140 on upper and lower sides of the positive electrode 150, and the negative electrode 130 on the solid electrolyte layer 140. The positive electrode 150 includes a positive electrode current collector 151 and positive electrode active material layers 152 stacked on both surfaces of the positive electrode current collector 51. The negative electrode 130 includes a negative electrode current collector 131 and a negative electrode active material layer stacked on one surface thereof.

Therefore, the laminate 110 is formed by placing the positive electrode current collector 150 in the middle in the stacking direction, and sequentially stacking the positive electrode active material layer 152, the solid electrolyte layer 140, the negative electrode active material layer, and the negative electrode current collector 131 on each of both surfaces of the positive electrode current collector.

As shown in FIG. 7, when the negative electrode 130 is a precipitation-type negative electrode, it may include a negative electrode coating layer 133 positioned on the negative electrode current collector 131. The initial charging begins in the absence of a negative electrode active material, and during the charging, lithium metal with a high density or the like is precipitated between the negative electrode current collector 131 and the negative electrode coating layer 133 and forms a lithium metal layer 134, which can serve as a negative electrode active material layer.

Accordingly, in an all-solid battery that has been charged once or more, the precipitation-type negative electrode 130 may include the negative electrode current collector 131, the lithium metal layer 134 positioned on the negative electrode current collector 131, and the negative electrode coating layer 133 positioned on the lithium metal layer 134. The lithium metal layer 134 refers to a layer of lithium metal or the like precipitated during the charging process of the battery and may be called a metal layer or a negative electrode active material layer.

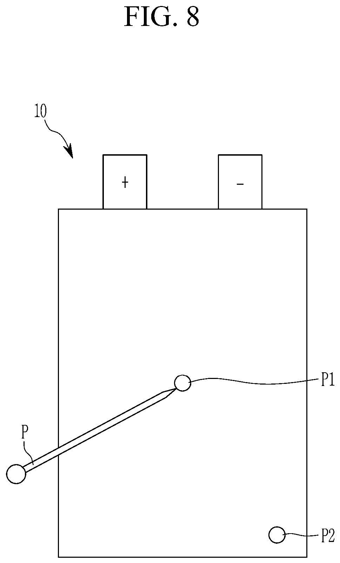

The ceramic insulating layers 120 are stacked on both outermost sides of the laminate 110. The ceramic insulating layers 120 are provided on sides of the negative electrodes 130 opposite to the solid electrolyte layers 140. When the all-solid rechargeable battery is damaged by an external force, for example, penetration by a penetration pin (P) (see FIG. 8) or collision, the positive electrode 150 and the negative electrode 130 may be electrically short-circuited. At this time, the ceramic insulating layers 120 protect the laminate 110, as functional layers on the outermost sides of the laminate 110, thereby reducing an amount of heat generation of the laminate 110.

When heat is generated in the laminate 110, the ceramic insulating layers 120 assist heat dissipation and thus can effectively lower the temperature of the laminate 110. As an example, the ceramic insulating layers 120 are formed including a conductive material, a ceramic material, and a binder. As an example, the ceramic material may be alumina or boehmite.

In the ceramic insulating layers 120, the ceramic material provides insulating properties to prevent a short circuit between the positive electrode 150 and the negative electrode 130, and the conductive material provides thermal conductivity to assist heat dissipation and thus prevent thermal runaway. Additionally, the ceramic insulating layers 120 protect the negative electrode current collector 131 from gas generated inside the laminate 110, and minimize pores and gas penetration due to rolling.

Below, results of Experimental Examples 11 to 14 and Comparative Example 2, which confirmed the insulating properties, thermal conductivity, and heat dissipation according to the composition ratio of the conductive material and the ceramic material forming the ceramic insulating layers 120, are shown in Table 2. The penetration experiment was conducted at room temperature, the diameter of the penetration pin (P) was 3 mm, and the penetration speed of the penetration pin (P) was 50 mm/sec.

During the penetration evaluation, there are some differences for each cell of the all-solid battery, but the maximum temperature is reached within 20 seconds immediately after penetration through the all-solid battery. Since the maximum temperature difference appears when the maximum temperature is reached, in Experimental Examples 11 to 14 and Comparative Example 2, the temperature was measured within 30 seconds immediately after penetration through the all-solid battery, and resultantly, the temperature difference ratio between the central and peripheral portions and the maximum temperature ratio at the central portion were obtained.

**(Table 2)**

| | Ceramic insulating layer | Thickness of ceramic insulating layer | Conductive material ratio | Binder ratio | Temperature difference ratio between central and peripheral portions | Maximum temperature ratio in central portion |
|---|---|---|---|---|---|---|
| Comparative Example 2 | Not applied | - | - | - | 100% | 100% |
| Experimental Example 11 | applied | 5 µm | - | 5 wt% | 39% | 35% |
| Experimental Example 12 | applied | 5 µm | 5 wt% | 5 wt% | 11% | 16% |
| Experimental Example 13 | applied | 5 µm | 5 wt% | 10 wt% | 12% | 16% |
| Experimental Example 14 | applied | 5 µm | 10 wt% | 5 wt% | 9% | 15% |

As shown in Comparative Example 2 and Experimental Examples 11 to 14, in the laminate 110 of Comparative Example 2 in which the ceramic insulating layer 120 was not applied and the laminates 110 of Experimental Examples 11 to 14 in which the ceramic insulating layer 120 was applied, it can be seen that the ceramic insulating layer 120 has a significant effect on the thermal conductivity and heat dissipation. That is, the ceramic insulating layer 120 has a great effect on the temperature difference ratio between the central portion (P1) and the peripheral portion (P2) and the maximum temperature ratio at the central portion, which indicate the thermal conductivity and heat dissipation.

In addition, as shown in Experimental Examples 11 to 14, in the laminate 110 of Experimental Example 11 in which the conductive material was not applied and the laminates 110 of Experimental Examples 12 to 14 in which the conductive material was applied, it can be seen that the conductive material has a significant effect on the thermal conductivity and heat dissipation. That is, the conductive material has the greatest effect on the temperature difference ratio between the central portion (P1) and the peripheral portion (P2) and the maximum temperature ratio at the central portion, which indicate the thermal conductivity and heat dissipation.

Comparison of the ratio of the conductive material in the ceramic insulating layer 120 can be confirmed by comparing Experimental Example 12 and Experimental Example 14. As an example, the conductive material in the ceramic insulating layer 120 can be implemented in an amount between 0.1 wt% and 30 wt%.

If the ceramic content is less than 30 wt%, the electrical insulation performance of the ceramic insulating layer 120 may deteriorate due to a lack of ceramic. If the ceramic content exceeds 95 wt%, the content of the conductive material in the ceramic insulating layer 120 may become insufficient due to the excess of ceramic, deteriorating the heat dissipation and heat conduction performance.

When the content of the conductive material is less than 0.1 wt%, the content of the conductive material is insufficient, so that the ceramic insulating layer 120 does not provide sufficient heat dissipation and heat conduction performance. When the content of the conductive material exceeds 30 wt%, the battery insulation performance of the ceramic insulating layer 120 may deteriorate due to the excessive content of the conductive material.

When the binder content is less than 1 wt%, the binding performance of the ceramic particles and the conductive material particles in the ceramic insulating layer 120 may deteriorate due to a lack of binder. If the binder content exceeds 40 wt%, the heat dissipation and heat conduction performance of the conductive material in the ceramic insulating layer 120 may deteriorate due to the excess of binder.

In Experimental Example 12, the ceramic insulating layer includes 90 wt% of ceramic, 5 wt% of conductive material, and 5 wt% of binder. In Experimental Example 13, the ceramic insulating layer includes 85 wt% of ceramic, 5 wt% of conductive material, and 10 wt% of binder. In Experimental Example 14, the ceramic insulating layer includes 85 wt% of ceramic, 10 wt% of conductive material, and 5 wt% of binder. That is, referring to Experimental Examples 12 to 14, the ceramic insulating layer may include 80 to 90 wt% of ceramic, 5 to 10 wt% of conductive material, and 5 to 10 wt% of binder.

FIG. 8 is a plan view showing a position of a laminate where a penetration pin penetrates during a penetration test in Experimental Examples 11 to 14 of the present invention and Comparative Example 2. Referring to FIG. 8, during the penetration test of the penetration pin (P), a temperature measurement portion of the laminate includes a central portion (P1) where the penetration pin (P) is inserted and a peripheral portion (P2) at least 30 mm away from the penetration pin (P). The difference in heat dissipation characteristics, that is, heat conduction characteristics, can be compared by the temperature difference between the central portion (P1) and the peripheral portion (P2).

As shown in Table 2, the difference in heat conduction characteristics can be indicated by the temperature difference ratio between the central portion (P1) and the peripheral portion (P2) and the maximum temperature ratio at the central portion. In Comparative Example 2, the temperature difference ratio between the central portion (P1) and the peripheral portion (P2) is 100%, and the maximum temperature ratio at the central portion is 100%. In contrast, in Experimental Example 11, the temperature difference ratio between the central portion (P1) and the peripheral portion (P2) is 39%, and the maximum temperature ratio at the central portion is 35%.

In Comparative Example 2, since there is no ceramic insulating layer, the temperature of the central portion (P1) is very high, and the temperature difference ratio between the central portion (P1) and the peripheral portion (P2) is very large because the heat dissipation characteristics, that is, the heat conduction characteristics, are low.

In contrast, in Experimental Example 11, the ceramic insulating layer without a conductive material was applied, so the ceramic insulating layer partially prevented an electrical short circuit and lowered the amount of heat generation. Therefore, the maximum temperature of the central portion (P1) is lowered to about 35% compared to the maximum temperature of the central portion (P1) of the Comparative Example 2.

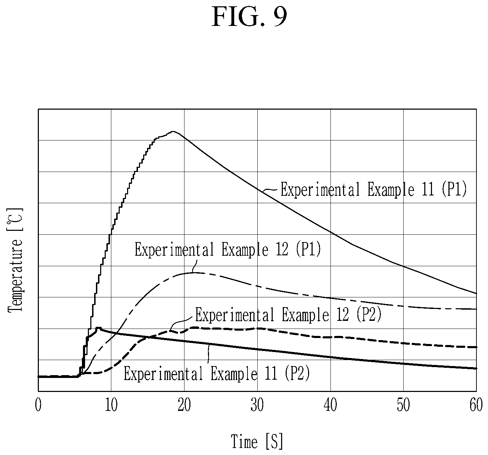

FIG. 9 is a graph showing temperature changes over time at a central portion where the penetration pin penetrates and a peripheral portion in Experimental Examples 11 and 12 during a test of FIG. 7. Referring to FIG. 9, since the penetration pin (P) penetrates and there is no conductive material in the ceramic insulating layer, it is difficult for heat generated to be dissipated to the outside, and it is also difficult for heat to be transferred in the horizontal direction, that is, in a direction from the central portion (P1) toward the peripheral portion (P2). Therefore, the heat generated locally at the central portion (P1) is present at the central portion (P1), so that a relatively high temperature state is exhibited compared to Experimental Examples 12 to 14. Experimental Example 11 has inferior heat dissipation and heat transfer performance compared to Experimental Examples 12 to 14.

In Experimental Example 12, the conductive material was applied to the ceramic insulating layer 120, so the heat generated along with the penetration of the penetration pin (P) was dissipated outward through the conductive material, and accordingly, the maximum temperature of the central portion (P1) was relatively lower compared to Experimental Example 11. That is, in Experimental Example 12, it can be observed that the slope of the temperature rise gradually increases due to the heat dissipation and the heat transfer in the horizontal direction.

In Experimental Example 11, the penetration of the penetration pin (P) results in a large temperature difference between the central portion (P1) and the peripheral portion (P2). In contrast, in Experimental Example 12, the penetration of the penetration pin (P) results in a small temperature difference between the central portion (P1) and the peripheral portion (P2). Therefore, the effect of the conductive material in the ceramic insulating layer 120 can be confirmed.

What has been described above is only one embodiment for carrying out the all-solid rechargeable battery of the present disclosure, and the present disclosure is not limited to the above-described embodiments. The technical spirit of the present disclosure lies in that one skilled in the art to which the present disclosure belongs could make various changes, as claimed in the claims below, without departing from the gist of the present disclosure.

**<Description of symbols>**

| | | | |
|---|---|---|---|
| 10, 210: | unit cell | 20, 220: | ceramic insulating layer |
| 30, 230: | negative electrode | | |
| 31, 231: | negative electrode current collector | | |
| 33, 233: | negative electrode coating layer | 34, 234: | lithium metal layer |
| 40, 240: | solid electrolyte layer | 50, 250: | positive electrode |
| 51, 251: | positive electrode current collector | | |
| 52, 252: | positive electrode active material layer | | |
| 110: | laminate | 120: | ceramic insulating layer |
| 130: | negative electrode | 131: | negative electrode current collector |
| 133: | negative electrode coating layer | 134: | lithium metal layer |
| 140: | solid electrolyte layer | 150: | positive electrode |
| 151: | positive electrode current collector | | |
| 152: | positive electrode active material layer | | |
| P: | penetration pin | P1: | central portion |
| P2: | peripheral portion | | |

## Claims

1. An all-solid rechargeable battery, comprising:
a plurality of unit cells each of which is formed by stacking a negative electrode, a solid electrolyte layer, and a positive electrode; and
ceramic insulating layers provided at least between the negative electrodes of adjacent ones among the unit cells and on the negative electrodes positioned on outermost sides of the entirety of the unit cells.

2. The all-solid rechargeable battery as claimed in claim 1, wherein:
each of the unit cells comprises:
a positive electrode current collector positioned in the middle, and
a positive electrode active material layer, the solid electrolyte layer, a negative electrode active material layer forming the negative electrode, and a negative electrode current collector sequentially stacked on each of both surfaces of the positive electrode current collector forming the positive electrode.

3. The all-solid rechargeable battery as claimed in claim 2, wherein:
the ceramic insulating layers are
provided on outer surfaces of the negative electrode current collectors.

4. The all-solid rechargeable battery as claimed in claim 2, wherein:
a first cell of the adjacent unit cells comprises
the positive electrode active material layer, the solid electrolyte layer, the negative electrode active material layer, and the negative electrode current collector sequentially stacked on each of both surfaces of the positive electrode current collector,
wherein a second cell adjacent to the first cell comprises
the positive electrode active material layer, the solid electrolyte layer, the negative electrode active material layer, and the negative electrode current collector sequentially stacked on each of both surfaces of the positive electrode current collector, and
wherein ceramic insulating layers positioned between the first cell and the second cell among the ceramic insulating layers
are arranged as a single layer between a pair of the negative electrode current collectors.

5. The all-solid rechargeable battery as claimed in claim 1, wherein:
the ceramic insulating layers each comprise
at least one of alumina and boehmite and a binder.

6. The all-solid rechargeable battery as claimed in claim 1, wherein:
the ceramic insulating layers each comprise 5 to 10 wt% of a binder and 90 to 95 wt% of ceramic particles.

7. The all-solid rechargeable battery as claimed in claim 1, wherein:
a thickness of each of the ceramic insulating layers is 5 µm to 50 µm.

8. The all-solid rechargeable battery as claimed in claim 1, wherein:
each of the unit cells comprises:
a positive electrode active material layer, the solid electrolyte layer, a negative electrode active material layer forming the negative electrode, and a negative electrode current collector sequentially stacked on one surface of a positive electrode current collector forming the positive electrode.

9. The all-solid rechargeable battery as claimed in claim 8, wherein:
a first cell of the adjacent unit cells comprises
the positive electrode active material layer, the solid electrolyte layer, the negative electrode active material layer, and the negative electrode current collector sequentially stacked on one surface of the positive electrode current collector,
wherein a second cell adjacent to the first cell comprises
the positive electrode active material layer, the solid electrolyte layer, the negative electrode active material layer, and the negative electrode current collector sequentially stacked on one surface of the positive electrode current collector, and
wherein ceramic insulating layers positioned between the positive electrode current collector of the first cell and the negative electrode current collector of the second cell among the ceramic insulating layers
are arranged as a single layer.

10. An all-solid rechargeable battery comprising:
a laminate formed by stacking a negative electrode, a solid electrolyte layer, and a positive electrode; and
a ceramic insulating layer comprising a conductive material provided on a side opposite to the solid electrolyte layer of the negative electrode positioned on an outermost side of the laminate.

11. The all-solid rechargeable battery as claimed in claim 10, wherein:
the laminate comprises
a positive electrode current collector positioned in the middle, and
a positive electrode active material layer, the solid electrolyte layer, a negative electrode active material layer forming the negative electrode, and a negative electrode current collector sequentially stacked on each of both surfaces of the positive electrode current collector forming the positive electrode.

12. The all-solid rechargeable battery as claimed in claim 10, wherein:
the ceramic insulating layer comprises 30 to 95 wt% of ceramic, 0.1 to 30 wt% of a conductive material, and 1 to 40 wt% of a binder.

13. The all-solid rechargeable battery as claimed in claim 10, wherein:
the ceramic insulating layer comprises 80 to 90 wt% of ceramic, 5 to 10 wt% of a conductive material, and 5 to 10 wt% of a binder.

14. The all-solid rechargeable battery as claimed in claim 10, wherein:
a temperature measurement portion of the laminate during a penetration test of a penetration pin comprises
a central portion where the penetration pin is inserted, and
a peripheral portion at least 30 mm away from the penetration pin, and
wherein heat dissipation characteristics are compared based on a temperature difference ratio between the central portion and the peripheral portion.

15. The all-solid rechargeable battery as claimed in claim 14, wherein:
the temperature difference ratio between the central portion and the peripheral portion is 9 to 39%.

16. The all-solid rechargeable battery as claimed in claim 14, wherein:
the temperature difference ratio between the central portion and the peripheral portion is 9 to 12%.

17. The all-solid rechargeable battery as claimed in claim 14, wherein:
a maximum temperature ratio at the central portion is 15 to 35%.

18. The all-solid rechargeable battery as claimed in claim 14, wherein:
a maximum temperature ratio at the central portion is 15 to 16%.
